Europäisches Patentamt

European Patent Office

Office européen des brevets

(19)

(11) Publication number: **0 039 525**
A2

# (12) EUROPEAN PATENT APPLICATION

(21) Application number: **81200365.5**

(22) Date of filing: **02.04.81**

(51) Int. Cl.³: **B 09 B 1/00**, B 63 B 17/06,
F 25 C 1/00

(30) Priority: **05.05.80 IT 1252680**

(71) Applicant: **Vilizzi, Vincenzo, Via A. Gavotti 5/1,
I-16128 Genova (IT)**

(43) Date of publication of application: **11.11.81**
**Bulletin 81/45**

(72) Inventor: **Vilizzi, Vincenzo, Via A. Gavotti 5/1,
I-16128 Genova (IT)**

(84) Designated Contracting States: **BE DE FR GB NL SE**

(74) Representative: **Lotti, Giorgio c/o Ing. Barzano' &
Zanardo S.p.A., Via Cernaia 20, I-10122 Torino (IT)**

(54) **Method and plant for converting fly ash and other powdery industrial refuse into manufactured blocks suitable for discharge into the sea.**

(57) In a ship there are provided a plurality of refrigerated cells (10) in which fly ash or other powdery refuse is mixed with water; the temperature being progressively lowered in the refrigerated cell until the mixture changes state from substantially liquid to solid, i.e. to ice; the walls (18) of the refrigerated cell (10) are then successively heated in order to melt the ice layer which adheres thereto; finally, a lower door (13) of the cell (10) is opened to cause the ice block to fall into the sea. The ice block must be such as to sink without dissolving even to a minimum extent during its fall towards the sea bed, so as not to spread the fly ash through the entire surrounding sea.

In order to attain this, the weight of the quantity of fly ash, present in unit volume of the mixture, must be in such a ratio that the weight of the volume of liquid displaced during the fall of the block towards the sea bed is less than the weight of the block itself.

ACTORUM AG

Method and plant for converting fly ash and other powdery

industrial refuse into manufactured blocks suitable for discharge into the sea.

************

The invention relates to a method and plant for converting residual fly ash  from coal combustion in boiler furnaces, and other powdery refuse into manufactured blocks having mechanical strength properties such that when discharged into the sea they are able to reach the sea bed by free fall without the very fine particles (0.5 - 100 microns) of which they are composed being able to become diluted and spread through the marine environment which has been passed through, i.e. without causing alterations to the ecological balance of the marine environment itself.

The object of the invention is to prevent the irreversible environmental degradation which would be caused if the fly ash was discharged into the sea by the present system using lighters with openable bottoms or sludge ships, this system consisting of

expelling more or less fluid pasty masses of said fly ash directly into the sea, and which as soon as it comes into contact with the liquid element becomes diluted and spreads to considerable distances from the discharge zone, aided by the action of the marine currents encountered during the slow (6 cm/min) fall towards the sea bed.

This method causes pollution of vast proportions, with inevitable ecological alteration of the marine environment.  The death of fish by asphyxia is the most apparent and immediate aspect, but the most serious aspect is the irreversible and catastrophic environmental degradation deriving from the deposition of the ash on the sea bed, with the consequent destruction of the

zooplankton, which is one of the most essential sources for the nutrition of the ichthyic fauna and for the development of the marine flora, and thus for the survival of the species.

It is therefore apparent that if the fly ash were to be made available on discharge in the physical state of consistent, compact manufactured blocks having a weight per unit volume greater than the weight of the volume of the liquid displaced in the sea, the discharge operation could be carried out in predetermined sea bed zones, with the avoidance of the danger of ecological disaster, due to the fact that the particles of fly ash would not be able to spread because they are agglomerated and locked into the blocks for the entire time employed·in reaching the predetermined sea bed zone.

By this means, it would also be possible to exactly localise the sea bed zones on which the discharge of the blocks is to be carried out, with the certainty that the fly ash of which they are composed  would deposit on these sea bed zones and not on others.

It would also be possible, whenever necessary, to provide devices for checking that the discharge has taken place exactly within the limits of the predetermined prescribed zones.

The blocks of the method according to the invention can be constructed either by land-based plants or by plants on board a maritime craft especially provided for loading and storing the fly ash to be converted into blocks suitable for discharging into the sea directly over the predetermined sea bed zones.   In the case of land-based plants, suitable means must be provided for
conveying the blocks as far as the loading point, and for all
the other requirements connected with their loading and storing
on the maritime craft from which they are then discharged into
the sea.

The method according to the present invention for converting fly
ash into blocks with mechanical strength properties which are
sufficient to provide them with a compactness such as to keep
the very fine particles of which they are formed reliably
agglomerated for the time period between the moment in which
the blocks are discharged into the sea and the moment in which
they touch the sea bed, consists of using sea water to form a
mixture with the fly ash to be discharged into the sea, and then
changing the physical state of said sea water from liquid to
solid, i.e. ice, in said mixture the weight of the quantity of
sea water, of density 1.026 $kg/dm^3$, and the weight of the quantity
of fly ash, of density 0.858 - 1.004 $kg/dm^3$ and porosity 0.82 $cm^3/g$,
which are present in unit volume of the mixture being in such a ratio
that the weight of the liquid volume displaced by the finished
block when discharged into the sea is less than the weight of
the finished block itself, so that this latter is compelled to
fall towards the sea bed.

The change in physical state of the sea water is attained by
lowering the temperature of the fluid pasty mass of the mixture
while contained in a suitable mould forming part of a freezing
apparatus.

The subtraction of heat from the fluid pasty mass through the walls
of the mould causes the sea water of the mixture to pass into the
solid state, i.e. ice, so constituting the "binder" for the fly

ash particles within the body of the frozen block which is
obtained.

Said block has mechanical strength properties sufficient to
allow it to sink in the sea without any alteration being possible
to the ecological balance of the marine environment through which
it passes during its fall, because the fly ash particles are
unable to separate from the body of the block in which they are
"bonded" by the ice, and cannot therefore spread through the
environment.

The block falls into the sea bed zone scheduled for its discharge,
and it is precisely in this zone and no other in which the fly
ash becomes deposited, because the "binder" dissolves in this
sea bed zone to return to its liquid physical state.

Because of the porosity of the fly ash particles, the "binder"
of the block, when returning to its liquid physical state, remains
within the interstices between the individual particles because
it has the same specific gravity as the element in which the fly
ash in the form of a block have been discharged, and thus the
fly ash particles remain at rest on the sea bed, in a state of
calm.

If however the mixture had been made using fresh water, because
of the fact that this has a specific gravity less than that of
sea water it would have tended to float, and would therefore
have entrained with it towards the surface the particles of fly
ash in the interstices of which it had been located.  This leads
to the possibility of layers of solid particles suspended in the
sea zones concerned with the discharge, in the form of fluid pasty
masses of fly ash moistened with fresh water in order to allow manipulation as far as the maritime craft.

The invention also comprises particular constructional details
and particular combinations and arrangements of parts, which
will be more completely apparent from the description given
hereinafter.

One non-limiting embodiment of the present invention is described
with reference to the drawing, in which:

Figure 1 is a diagrammatic section through one embodiment of the
apparatus for freezing mixtures constituted by fly ash or other
powdery refuse and water, according to the method of the present
invention;

Figure 2 is a longitudinal section through a maritime craft,
namely a ship, suitable for use for all the operations necessary
for converting fly ash or other powdery refuse into blocks with
mechanical strength properties, and for their discharge into the
sea;

Figure 3 is a plan view of the ship taken on different levels,
and with parts removed in order to make other parts of the
combinations of Figure 1 and Figure 2 more apparent;

Figure 4 is a cross-section through Figure 3.

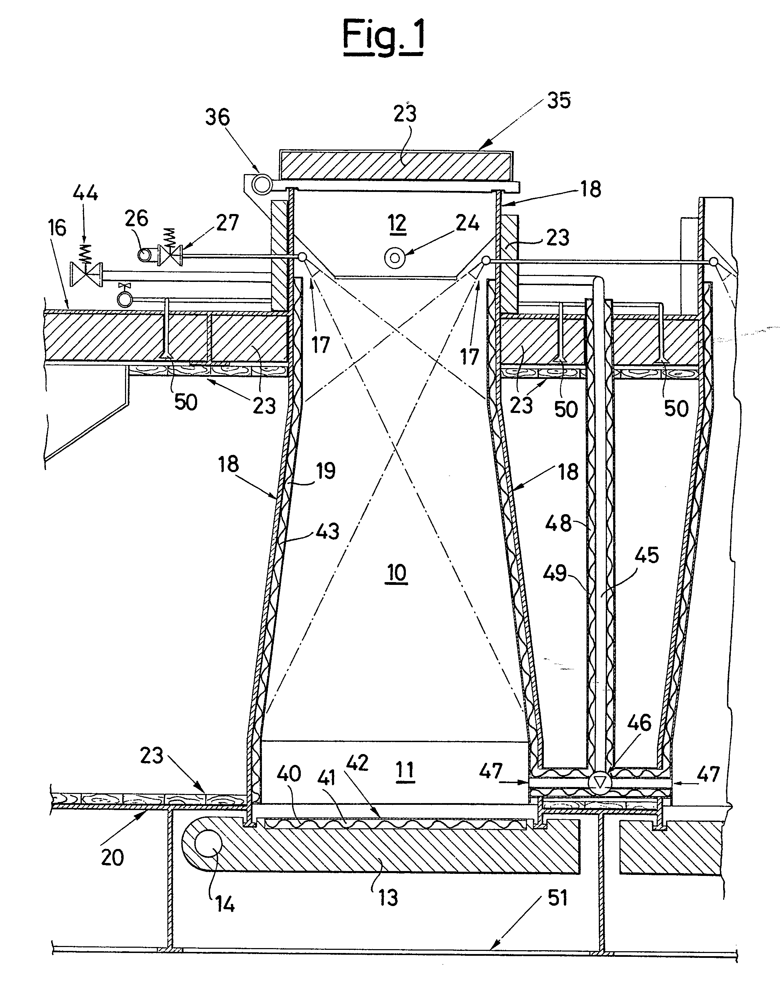

With reference to the diagrammatic illustration of Figure 1,
the freezing unit comprises a mould assembly 10 of truncated
pyramid shape, composed essentially of three zones, namely a
lower exit zone 11, a central zone with subvertical walls, and an
upper zone 12 through which the mould is fed.

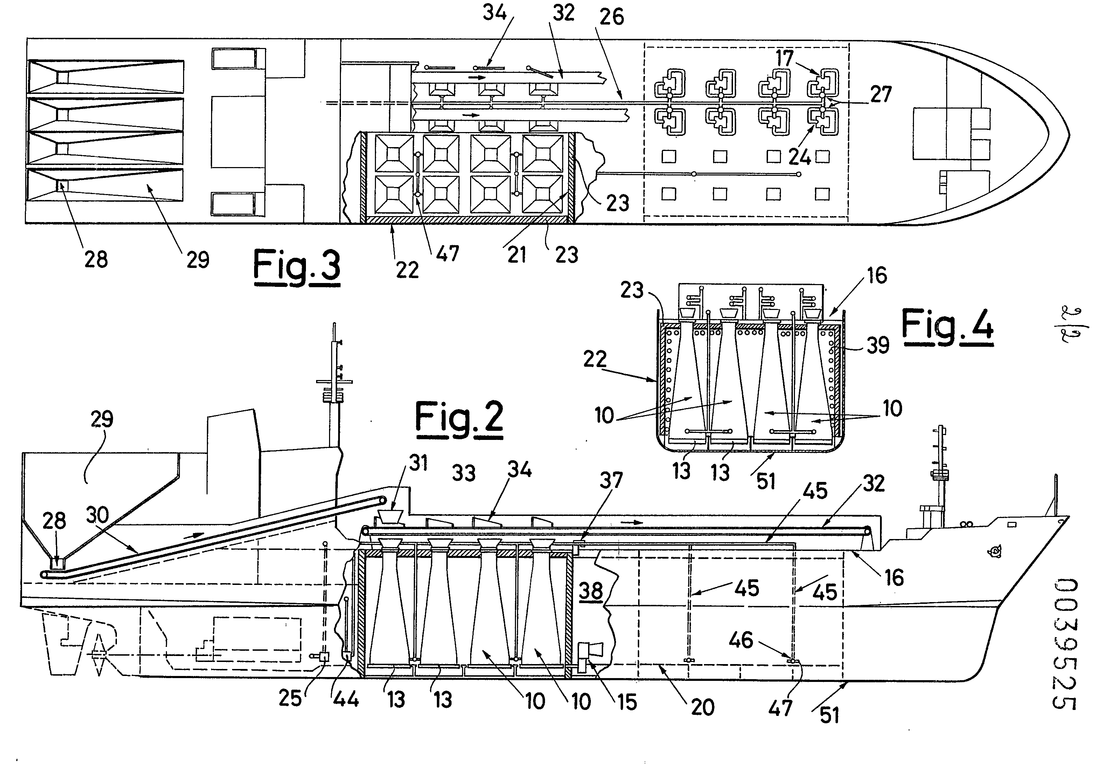

The lower zone 11 is closed by a sealed door 13 keyed on to a
shaft 14 connected to a motorised unit 15 (Figure 2) which
controls the opening and closure of the door.

In the zone 12, which rises above the surface 16 which constitutes the upper or stowage deck of the ship (Figure 3 and 4) there is provided a series of nozzles 17 (only two per mould are shown in Figures 1-3), the purpose of which is to inject a certain quantity of water under pressure into the mould assembly 10 so that the faces of the walls 18 and those of the sealed conduits 19 which form an integral part thereof are struck by the water.

As can be seen in Figures 1-3, the mould 10 is contained in a refrigerated cell, the walls of which are the actual structures of the ship, and which is bounded by the stowage deck 16, the stowage base 20, the transverse bulkheads 21, Figure 3, and the sides 22 of the ship, Figures 3-4, and which is insulated with thermal insulation 23.

Figure 1 shows in greater detail the essential constituents of said thermal insulation 23 necessary for constructing a refrigerated cell of high efficiency.

The mould 10 is therefore provided in a refrigerated cell, in which the temperature can fall considerably below $0^{\circ}C$.

The water injected into the mould assembly 10 by means of the nozzles 24 is sprayed so that it strikes the walls 18 and the walls of the sealed conduits 19, and freezes thereon while it falls towards the mould base closed by the door 13, on which a certain predetermined quantity becomes deposited, and mixes with a certain quantity of sea water already present on the mould base, this being a residue of an operation described hereinafter. Because of the temperature of the mould assembly in the zone 11, these two water quantities are converted into ice.

Figures 2 and 3 show the plant 25-26-27-17/24, in which 25 is a pump which pumps the water through the pipe 26 and two-way valve 27 into the nozzles 17 for the first filling stage and then into the mouths 24 for the second filling stage, in which the moulds are filled with the water quantity necessary for forming the mixture with the fly ash (or other powdery refuse).

For filling the mould, the fly ash (or other powdery refuse) is withdrawn from the storage hoppers 29, Figs. 2 and 3, through the mouths 28, so that it falls on to the main belts 30, Fig. 2, and is then discharged from these by way of a series of pans 31, Fig. 2, on to the feed conveyor belts 32, Figs. 2 and 3, each of which serves one row of moulds along a longitudinal plane through the hoppers 33, Fig. 2, deviators 34, Figs. 2 and 3, then operating to cause the fly ash (or other powdery refuse) to fall into the underlying moulds through the feed zones 12, Fig. 1, of each mould with the door 35 open.

The doors 35, keyed on to a shaft 36 for each row of moulds per room, are connected to a motorised unit 37, Fig. 2, which controls the opening and closure of the doors.

The motorised units 15 for controlling the doors 13 which close the bases 11 of the moulds 10, Fig. 1, are located in the coffer dams 38, Fig. 2, between two sealed transverse bulkheads which bound two adjacent refrigerated cells, one on each side.   The motorised units 37, Fig. 2, for controlling the doors 35 which close the feed ends 12 of the moulds 10, Fig. 1, are arranged on the upper or stowage deck in the example, Fig. 2.

The cold necessary   to   change the state of the "binding" water into ice in the mould, and thus produce the manufactured block with mechanical strength properties according to the method of the present invention, is supplied to the refrigerated cells from the cold production unit through the pipes 39, Fig. 4, which are arranged along all the walls of said rooms.

The cold delivery takes place in accordance with a previously programmed cycle.

In order to discharge the blocks, the heat sources 40 indicated in Fig. 1 and provided in the sealed conduits 41 of the wall 42 of the inner face of each door 13 are activated so as to melt the ice layer on the bottom of the block, which adheres to said wall, to facilitate the opening of the door.   This opening operation is carried out for two rows of doors of corresponding moulds disposed in two rows of moulds which are symmetrical about the longitudinal central plane through the ship, and are controlled by the motorised units 15.

The heat sources 43, Fig. 1, provided in the sealed conduits 19 in the subvertical walls 18 disposed in the moulds 10 are also activated, so melting the layer of ice and of frozen mixture of the corresponding faces of the block, and facilitating its separation from the walls of the mould and its fall through the exit bases 51, which are free because of the "completely open" position of the doors 13, and to the sea bed in the zone below the hull of the ship. The discharge of the fly ash or other powdery refuse has therefore been carried out in the form of manufactured blocks which possess sufficient mechanical strength properties and a sufficiently compact state, due to the physical state of the "binder", for the entire time necessary for the blocks to reach the sea bed in the predetermined discharge zone, this being the only zone in which the heavy component materials of the blocks, whether these be fly ash or other powdery refuse, become "deposited" as a consequence of the change in physical state of the solid, i.e. ice "binder" for said heavy materials, into

0039525

liquid as a consequence of the increase in its temperature due to the absorption of its cold by the surrounding liquid, i.e. the sea.

No pollution takes place because the particles of fly ash or other powdery refuse are not able to become diluted and spread during their fall towards the sea bed, which takes place with a speed of the frozen block which is obviously greater than the average speed of the individual particles (6 cm/min), and therefore the degradation of the marine environment and of its ecological balance cannot begin.

The mould assembly 10, Figs. 1, 2, 3 and 4, which is emptied by the emergence of the block is immediately flooded by the sea water, which because of the fact that the door 13 is in the open position rises through the exit base 51 to the level corresponding to the level of immersion of the ship in the position which it assumes at that moment. When flooding has terminated, the motorised unit 15 closes the door (in fact it closes the doors of two rows of moulds which, as stated, are symmetrical about the longitudinal central plane of the ship, in order to prevent heeling of the ship), and when this operation has been carried out the pump 44 starts, which sucks the water from the moulds and, by way of the pipes 44, the non-return valves 46 and the ports 47 and returns it to the sea. One down-pipe can serve a number of moulds, as shown in the example of the figure.

A certain quantity of water remains on the base of the mould between the bottom of the port 47 and the upper face 42 of the door 13, Fig. 1.

The operation has been made possible because of the fact that, as shown in Figure 1, the pipe portion 45, the non-return valve 46 and the connections for the ports 47 are contained and protected in a sealed conduit 48 in which heat sources 49, for example electrical heating elements are provided which, when activated, prevent the freezing of the residual water in these three components of the suction system at the end of the previous mould emptying operation.

The manufacturing cycle for the blocks can then be repeated. Figure 1 shows a series of tubes, 50, for injecting a dry inert gas, such as nitrogen, into the body of the thermal insulation of the cells, to prevent any ice being able to form as a consequence of the presence of moist air in the insulation itself.

Although one typical embodiment of the invention has been described and examined, other applications thereof are possible, and changes, modifications and replacements can be made to the embodiment without leaving the scope of the inventive idea.

0039525

WHAT WE CLAIM IS

1. A method for converting fly ash and other powdery refuse
into manufactured blocks suitable for discharge into the sea,
and a method for their discharge, characterised by consisting
of the following stages in succession:

a) mixing fly ash or other powdery refuse with water in a
   refrigerated cell (10);

b) progressively lowering the temperature in said refrigerated
   cell (10) until the pasty mass obtained from stage (a) changes
   its state from substantially liquid into solid (ice);

c) heating the walls (18) of the refrigerated cell (10) until
   the layer of ice which adheres to them on their inside melts;

d) opening a door (13) of the cell (10) to allow the ice block
   obtained in accordance with stages (a) and (b) to fall into
   the sea;  the pasty mass produced in accordance with stage (a)
   being such that the weight of the quantity of fly ash,
                    both present in unit volume of the pasty
   mass, are in a ratio such that the weight of the volume of liquid
   displaced during the fall in stage (d) is less than the weight
   of the manufactured block obtained in accordance with stages
   (a), (b) and (c).

2. A method as claimed in claim 1, characterised in that stage (a)
is divided into three successive passages, namely:

a1) a first quantity of water is sprayed into the refrigerated cell
    (10) and forms a film of ice against the walls of said cell;

a2) the remaining scheduled quantity of water is fed into the cell;

a3) the scheduled quantity of fly ash is poured into the cell when full of water.

3. A method as claimed in claim 1, characterised in that stage (b) is carried out by means of a refrigeration system (39) connected to the walls (18) of the cell (10) and which subtracts heat progressively from the pasty mass through the walls (18) of said cell.

4. A method as claimed in claim 1, characterised in that stage (c) is carried out by activating heat sources (40, 43) in sealed conduits (41, 19) provided in the walls (42, 18) of the cell (10).

5. A refrigerated ship suitable for discharging into the sea manufactured blocks produced from fly ash or other powdery refuse, in accordance with the method as claimed in claims 1 to 4, characterised by providing, in combination: a series of hopper compartments (29) for storing the fly ash or other powdery refuse, loaded in any manner; a conveyor belt system (30) for distributing the fly ash or other powdery refuse on to a plurality of conveyor belts (32) for their distribution into freezing moulds installed in refrigerated cells (10), the distribution being carried out by means of deviators (34) and charging hoppers (33) over said moulds; a plurality of holds (10) suitable for refrigerated cells; a plurality of moulds comprising subvertical walls, a lower major exit base (11) which is open and fitted with a door (13) which can be opened by a motorised unit (15) located in the coffer dams (38), and a minor feed base (12) which is open and fitted with an inlet door (35) which can be opened by a motorised unit (37) located on the deck, and further comprising a plurality of sealed conduits (23) forming part of the walls and of the upper face of the door (35), and in which heat sources can be activated; a plurality of spray nozzles (17) for water for the first stage of the mould filling cycle; a plurality of ports 24 for feeding water into the moulds (10) for a second and final stage of the mould filling cycle; one or more systems (25, 26, 27) for enabling said filling of the moulds with industrial water to be carried out; one or more systems (44, 45, 46, 47) for enabling the moulds (10) to be emptied of the sea water which has entered after the emergence of the manufactured blocks; a cold production unit (35) able to supply the cold necessary for the water of the mixture to be able to change its physical state from liquid to solid, i.e. ice, inside the moulds of the refrigerated cells (10); a plurality of sealed conduits (23) about the components of the system for drawing the sea water from the moulds, in said conduits (23) there being provided heat sources (49) which when activated prevent the residual water from the previous emptying operation from freezing; thermal insulation of the cell walls with the provision of pipes (50) for injecting a dry inert gas in order to prevent the formation of ice within the body of the insulation as a consequence of the presence of moisture in the residual air within the insulation; and a group of monitoring and control systems for all the operations connected with the manufacturing cycle for the blocks in accordance with the method as claimed in claims 1 to 5.

6. A refrigerated ship as claimed in claim 5, characterised by being not self-propelled.

0039525

# Fig.1

0039525

Fig.3

Fig.4

Fig.2